# EUROPEAN PATENT SPECIFICATION

(11) **EP 0 844 161 B1**
(45) Date of publication and mention of the grant of the patent: **22.01.2003**
(21) Application number: 97120426.8
(22) Date of filing: 21.11.1997
(51) Int. Cl.: B61H 15/00, F16J 15/44

(54) **A sealing arrangement, particularly for a rail vehicle slack adjuster**
Dichtungsanordnung, insbesondere für einen Spielnachsteller für Schienenfahrzeuge
Dispositif d'étanchéité, notamment pour un dispositif de rattrapage de jeu d'un véhicule ferroviaire.

(30) Priority: 25.11.1996 SE 9604312
(43) Date of publication of application: 27.05.1998
(73) Proprietor: SAB WABCO Aktiebolag, 261 24 Landskrona (SE)
(72) Inventor: Emilsson, Fred, 231 00 Trelleborg (SE)
(74) Representative: Petri, Stellan

(56) References cited:
- EP-A- 0 353 796
- EP-A- 0 729 873
- DE-C- 962 842

## Description

### Technical Field

This invention relates to a sealing arrangement, as described in the preamble of claim 1.

### Background of the Invention

As is well known to any person skilled in the art, there are both axial and rotational movements between the rod or spindle and housing or barrel of a conventional rail vehicle slack adjuster of the axial type at each and every brake operation. This means that the required sealing between the rod and the housing is exposed to great wear, not the least in view of the extremely harsh environment underneath a rail vehicle, where the slack adjuster is mounted.

A very conventional sealing in the housing may consist of one or more internal sealing rings engaging the rod. These sealing rings may be made of a plastic material in order to withstand the wear better than rubber rings. The result is, however, not satisfactory in some instances when the sealing after a certain period of operation is not tight any more and allows water and contaminants to enter the interior of the slack adjuster resulting in rust problems and eventually function disturbances.

A solution to the above problems was presented in EP-B-353 796, to which reference is made for a full understanding in the preamble of claim 1.

The sealing arrangement proposed therein has been used in practice for a period of time and has generally speaking proved advantageous, especially with regard to the possibility for water or moist introduced in the cup in any way to leave it. However, a special problem is that the sealing arrangement is sometimes exposed to forceful water sprays, for example when the undercarriage of the vehicle is cleaned. Generally speaking, the object of the invention is to improve the ability of the sealing arrangement defined above to prevent the intrusion of water, moist, dirt and the like, whilst allowing water in the cup to leave it.

### The Invention

According to the invention, there is a sealing, provided in the cup at its second end, which comprises flange-like portions, extending into close proximity with the inner wall of the cup for forming a labyrinth seal, and a sealing lip in sealing contact with the end of the cup for preventing the intrusion of water and the like in the cup.

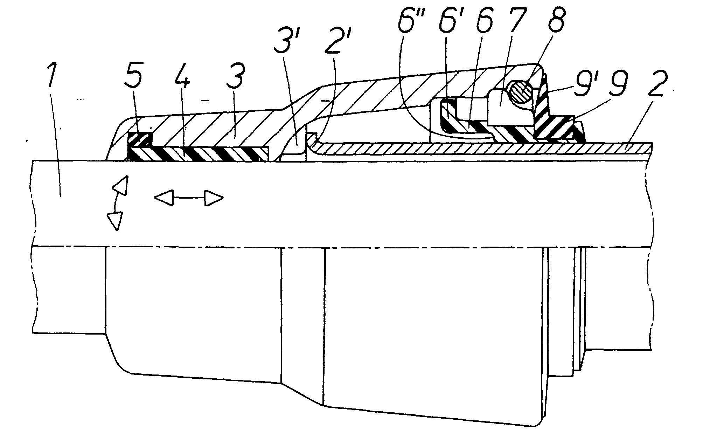

### The Drawing

The invention will be described in further detail below reference being made to the accompanying drawing, in which the single Figure is a side view, partly in section, of a sealing arrangement according to the invention.

### Detailed Description of a Preferred Embodiment

In a conventional rail vehicle slack adjuster of the so called axial type a circular rod or spindle 1 is intended to move axially back and forth but also to rotate relative to a substantially tubular housing or barrel 2, as is well known to any person skilled in the art.

In a sealing arrangement according to the invention the housing 2 is at its end provided with a circumferential flange 2' for a purpose to be described. A cup 3 surrounds the end of the housing 2. At its forward end (to the left in the Figure) the cup 3 is provided with a sealing consisting of a slitted sealing bushing 4, preferably made of plastic, and a rubber O-ring 5, backing the sealing bushing 4. Hereby the cup 3 will be sealingly guided for movements back and forth on the rod 1 without causing undue wear.

At the other end (to the right in the Figure) of the cup 3 there is provided a sealing according to the characterizing part of claim 1.

In sealing contact with the tube 2 but allowing relative axial movements is a sleeve 6, which is divided into two parts for permitting mounting and preferably is made of plastic. At its end projecting into the cup 3 the sleeve 6 is provided with a radial flange 6', which extends close to but not in contact with the inner wall of the cup 3. Integral with the sleeve 6 is a sleeve ring 7. Also the sleeve ring 7 extends close to but not in contact with the inner wall of the cup 3. Both the radial flange 6' and the sleeve ring 7 may be provided with circumferential notches, which are staggered in relation to each other; the shown section is through a notch in the sleeve ring 7.

A spring circlip 8 is arranged in a circumferential groove in the cup 3 for holding the sleeve 6 with the sleeve ring 7 in proper position in relation to the cup 3.

A collar 9, preferably made of rubber, is arranged in an end groove in the sleeve 6. The collar 9 is provided with a sealing lip 9' in elastic contact with the end of the cup 3.

The function of the flange 2' is primarily to set the limits for the relative axial movements between the tube 2 and the cup 3. At its movement to the left in the drawing the tube flange 2' will reach heads 3' in the cup 3 and at continued leftward movement push the cup 3 to the left. At its movement to the right the flange 2' will reach a circumferential shoulder 6" on the sleeve 6 and at continued rightward movement push the cup 3 to the right via the ring 7 and the locking ring 8.

The improved sealing of the described arrangement relies on the double labyrinth function of the flange 6' and the sleeve ring 7 in relatively close proximity to the inner wall of the cup 3 as well as the function of the sealing lip 9' to allow possibly condensed water to leave the interior of the cup 3 but at the same time preventing water from entering this interior, which is especially critical, when water at high pressure is sprayed at the underframe of a rail vehicle for cleaning purposes.

## Claims

1. A sealing arrangement, particularly for a rail vehicle slack adjuster, between a generally tubular housing (2) and a rod (1), which is axially and rotatably movable relative thereto, said sealing arrangement comprising a cup (3) provided with a first sealing (4) at a first end for sealingly engaging the rod (1) and being movable with the rod, having a greater inner diameter than the outer diameter of the rod and extending along the rod (1) over the free end of the housing (2), said cup (3) being provided at its second end with a sealing (6-9) in sealing engagement with the housing (2), **characterized in that** said sealing (6-9) comprises flange-like portions (6', 7), extending into close proximity with the inner wall of the cup (3) for forming a labyrinth seal, and a sealing lip (9') in sealing contact with the second end of the cup (3) for preventing the intrusion of water and the like in the cup (3).

2. An arrangement according to claim 1, **characterized in that** the sealing (6, 9) comprises a sleeve (6), which has two flange-like portions (6', 7), and a collar (9), provided with the sealing lip (9'), in a groove in the sleeve.

3. An arrangement according to claim 2, **characterized in that** the sleeve (6) is provided with a radial flange (6') and a sleeve ring (7).

4. An arrangement according to claim 3, **characterized in that** the sleeve (6) is divided into two parts for permitting mounting.

5. An arrangement according to any of the preceding claims, **characterized in that** the sealing (6-9) is held in position by a spring circlip (8) in the end of the cup (3).

## Patentansprüche

1. Dichtungsanordnung, insbesondere für einen Schienenfahrzeug-Spielausgleicher zwischen einem etwa rohrförmigen Gehäuse (2) und einer Stange (1), die gegenüber dem Gehäuse axsial und in Drehrichtung bewegbar ist, wobei die Dichtungsanordnung aufweist: einen Becher (3) mit einer ersten Dichtung (4) an einem ersten Ende, um in dichtendem Eingriff mit der Stange (1) zu stehen und mit dieser bewegbar zu sein, wobei der Innendurchmesser des Bechers größer ist als der Außendurchmesser der Stange und der Becher sich entlang der Stange (1) über das freie Ende des Gehäuses (2) hinweg erstreckt, wobei der Becher (3) an seinem zweiten Ende mit einer Dichtung (6-9) in dichtendem Eingriff mit dem Gehäuse (2) ausgestattet ist, **dadurch gekennzeichnet, dass** die Dichtung (6-9) flanschähnliche Abschnitte (6', 7) aufweist, die sich in enger Nachbarschaft zu der Innenwand des Bechers (3) zur Bildung eine Labyrinthdichtung erstrecken, und eine Dichtungslippe (9') in dichtendem Kontakt mit dem zweiten Ende des Bechers (3) zum Verhindern des Eindringens von Wasser und dergleichen in den Becher (3) aufweist.

2. Anordnung nach Anspruch 1., **dadurch gekennzeichnet, dass** die Dichtung (6,9) eine Hülse (6) mit zwei flanschähnlichen Absschnitten (6', 7) und einen in einer Nut der Hülse befindlichen, mit einer Dichtungslippe (9')ausgestatteten Kragen (9) aufweist.

3. Anordnung nach Anspruch 2., **dadurch gekennzeichnet, dass** die Hülse (6) mit einem Radialflansch (6') und mit einem Hülsenring (7) versehen ist.

4. Anordnung nach Anspruch 3., **dadurch gekennzeichnet, dass** die Hülse (6) zum Ermöglichen der Anbringung in zwei Teile aufgeteilt ist.

5. Anordnung nach einem der vorhergehenden Ansprüche, **dadurch gekennzeichnet, dass** die Dichtung (6-9) von einem Feder-Sprengring (8) in dem Ende des Bechers (3) an Ort und Stelle gehalten wird.

## Revendications

1. Dispositif d'étanchéité, en particulier pour un régleur de frein de véhicule ferroviaire, entre un corps globalement tubulaire (2) et une tige (1), qui peut être déplacée axialement et en rotation par rapport au corps, ledit dispositif d'étanchéité comportant une coupelle (3) pourvue d'un premier joint (4) à une première extrémité pour établir un contact étanche avec la tige (1) et pouvant être déplacée avec la tige, ayant un diamètre intérieur plus grand que le diamètre extérieur de la tige et s'étendant le long de la tige (1) sur l'extrémité libre du corps (2), ladite coupelle (3) étant pourvue, à sa seconde extrémité, d'un joint d'étanchéité (6-9) en contact d'étanchéité avec le corps (2), **caractérisé en ce que** ledit joint d'étanchéité (6-9) comporte des parties (6', 7) analogues à des rebords, s'étendant jusqu'à proximité étroite de la paroi intérieure de la coupelle (3) pour former un joint à labyrinthe, et une lèvre (9') d'étanchéité en contact d'étanchéité avec la seconde extrémité de la coupelle (3) pour empêcher l'entrée d'eau et autres dans la coupelle (3).

2. Dispositif selon la revendication 1, **caractérisé en ce que** le joint d'étanchéité (6, 9) comporte un manchon (6), qui a deux parties (6', 7) analogues à des rebords, et une collerette (9), pourvue de la lèvre (9') d'étanchéité, dans une gorge située dans le manchon.

3. Dispositif selon la revendication 2, **caractérisé en ce que** le manchon (6) est pourvu d'un rebord radial (6') et d'une bague (7) de manchon.

4. Dispositif selon la revendication 3, **caractérisé en ce que** le manchon (6) est divisé en deux parties pour permettre le montage.

5. Dispositif selon l'une quelconque des revendications précédentes, **caractérisé en ce que** le joint d'étanchéité (6-9) est maintenu en position par un circlip à ressort (8) dans l'extrémité de la coupelle (3).
